# EUROPEAN PATENT SPECIFICATION

(11) **EP 3 496 836 B1**
(45) Date of publication and mention of the grant of the patent: **01.09.2021**
(21) Application number: 17748701.4
(22) Date of filing: 26.07.2017
(51) Int. Cl.: B01D 36/00, B01D 27/08, B01D 27/10, B01D 27/14

(54) **DIESEL FUEL PRE-FILTERING SYSTEM**
DIESELKRAFTSTOFFVORFILTRIERUNGSSYSTEM
SYSTÈME DE PRÉ-FILTRATION DE CARBURANT DIESEL

(30) Priority: 08.08.2016 BR 102016018208
(43) Date of publication of application: 19.06.2019
(73) Proprietor: Mahle Metal Leve S/A, 13210-877 Jundiaí - SP (BR); Mahle International GmbH, 70376 Stuttgart (DE)
(72) Inventor: DOMINGUES, Tadeu Geraldo, 13201-030 Jundiaí-Sao Paulo (BR); FERRARI, Felipe, 13344-450 Indaiatuba-Sao Paulo (BR); FRITZ, Luiz Carlos, 13339-250 Indaiatuba-Sao Paulo (BR); JUN YOSHINO, Fernando, 48307 Rochester, MI (US)
(74) Representative: BRP Renaud & Partner mbB Rechtsanwälte Patentanwälte Steuerberater
(86) International application number: PCT/EP2017/068925
(87) International publication number: WO 2018/028995

(56) References cited:
- DE-A1-102012 216 355
- DE-U1- 29 915 146
- US-A- 3 312 351
- US-A- 4 372 847
- US-A1- 2009 078 626
- US-A1- 2009 184 041
- US-A1- 2015 151 226

## Description

### Field of the invention

The present invention pertains to the field of automotive engineering, and relates to a diesel fuel pre-filtering system, more specifically a pre-filtering system, for diesel oil, to be used in fuel supply lines for internal combustion engines operating on a diesel cycle, and which system provides improvements in operation, assembly and replacement.

### Antecedents of the invention

Internal combustion engines operating on a diesel cycle require special attention to be paid to the quality of the fuel before it enters the combustion chamber. One of the main characteristics to be noted in terms of fuel quality is the quantity of water present in the diesel oil.

Water is always present in diesel oil, since it can be absorbed from moisture in the air, from condensation on the walls of tanks, or through carelessness in handling the fuel. Thus, water can be present in different quantities and forms in diesel oil, i.e.: dissolved; in free form; or emulsified.

When it is in free form, the water is in liquid phase, distinct from the oil, and thus these components separate owing to the difference in their densities. Since the density of water is greater than the density of oil, the water tends to form a lower layer through the effect of gravity.

As well as promoting the corrosion of components, the presence of water in diesel oil also affects fuel consumption, causes premature wear and corrosion of the injection system, irregular combustion, and facilitates the growth of colonies of microorganisms that use the diesel oil as food, which can result in generation of the known "diesel sediment", which is highly damaging, especially to modern engines, giving rise to clogging of filters and pumps.

For this reason, the presence of a system for pre-filtering before supply to the engine, which removes the maximum possible quantity of impurities and water from the diesel oil, has a direct effect on the performance and service life of the engine, and is of vital importance for satisfactory running of this type of engine.

At present, vehicles which operate with a diesel engine comprise a filtering and pre-filtering system, the pre-filtering system being responsible for providing a first step of removal of impurities from the diesel oil and from the water contained in it. Generally positioned to the rear of the driver's cab in trucks, the pre-filter allows the driver daily to drain off the water that has settled at the base of the pre-filters.

Thus, the most common pre-filters in the current prior art comprise a lower area consisting of translucent material (commonly derived from thermoplastic material) or at least one inspection window and a drainage mechanism which can release the fluid contained in the base of the pre-filtering container, thus releasing the excess water that has settled out from the diesel fuel.

Inside the pre-filter according to the current prior art, it is common for there to be a single coalescing filtration means that accumulates, on its surface, the drops of water present in the diesel, until larger drops form and settle out. However, since the filtration means retains a small quantity of contaminant, the coalescing effect of the filtration means is lost because the surface is covered, thus allowing the water to pass through the pre-filter and putting the service life of the engine at risk.

The pre-filters according to the prior art comprise the translucent inspection area defined by a component made of translucent thermoplastic material which can be removed from the filter housing structure in order to allow the filtering component to be replaced when it reaches the replacement interval defined by the vehicle manufacturer.

However, this solution involves periodic removal of the translucent element, which, since it is more fragile, commonly breaks during this replacement of the filtering component and also loses its translucence in the long term.

Furthermore, pre-filters according to the current prior art commonly consist of metal material and have only one separation stage, i.e. a single filtration means responsible for retaining contaminants and separating the water from the fuel. These models are not only expensive to produce and expensive to scrap (since they need to be dismantled after being scrapped so that each of their component materials can be properly disposed of), but also have the disadvantage of subsequently permitting water to pass into the fuel supply line when the filtering component reaches a certain level of saturation of dirt on its surface.

Document GB9503333 has multiple filtering areas, with the final filtering area formed by hydrophobic material, but the solution proposed by GB9503333 has a complex assembly system, since it is secured to the filtering line by means of juxtaposed assembly onto a flat surface into which the inlet and outlet ducts are perforated, pressed on by a means for screwing at the edges thereof. In addition, the document does not include replacement of the filtering system as a whole at the time of each replacement of the filtering component, and it likewise does not have an inspection window may retain bubbles within.

Document P11005307-8 concerns a filter provided with two filtering stages, a second filtering stage being defined by a micro-mesh which can prevent water from passing. However, this solution has the disadvantage that it does not include use of an inspection window for checking of the level of water which has accumulated within, since it uses an automated drainage system. However, the use of an automated drain involves a high cost, and does not allow the user to detect any faults in this automated system, which can result in extreme accumulation of water inside the filter without the user noticing this. Furthermore, the system proposed by P11005307-8 is a simplified filter, and does not have means for activation of a supply line retention valve, meaning that it is necessary to close the filtered fuel line manually when the filter is replaced. Also, the solution proposed by P11005307-8 is susceptible to the accumulation of bubbles retained within.

Document PI0109974-4 concerns a filtering system which comprises a priming pump incorporated in a specific head for operation with the filtering system concerned, for removal of air bubbles from within when the filtering system is replaced or removed from the head. This filtering system is connected to the head by means of the threading of the outlet area of the filter on the fuel line, where a retention valve with a spring and ball is used, the latter being pressed by a pin which is fixed and concentric to the threaded bore, said valve being activated only when the filtering system is coupled to the head.

However, the solution proposed by PI0109974-4 uses a single filtering component, making it susceptible to passage of water into the interior when the filtering component has a saturated filtering surface. Furthermore, the system proposed by PI0109974-4 uses an automated drain, which involves a high cost and does not allow the user to detect any faults in said automated system, which can result in extreme accumulation of water inside the filter without the user noticing this.

US 2009/0184041 A1 shows a fuel-water filter/separator with a housing that houses a filtering component and has a clear plastic section.

US 2009/0078626 A1 shows a Filter catridge housing attachement system with a housing. The housing comprises an upper shell and a lower shell connected to each other.

Thus, the current prior art lacks a diesel fuel pre-filtering system capable of providing efficient filtering, in terms of both removal of foreign bodies and removal of water present in the fuel, which would guarantee the user simple and easy assembly, as well as simplified use, a low production cost and easy disposal.

### OBJECTS AND DESCRIPTION OF THE INVENTION

Therefore, it is an object of the present invention to provide a pre-filtering system for diesel oil consisting only of thermoplastic material, which makes it possible to facilitate and expedite its assembly and replacement on the fuel line for supply to the engine of a vehicle.

Another object of the present invention is to provide a diesel fuel pre-filtering system which has more than one filtering stage, with the aim of preventing saturation of the first filtering stage from affecting the passage of water to the fuel supply line.

Another object of the present invention is to guarantee that the inspection window is always on view to the user/motorist who is carrying out preventative maintenance on the vehicle (drainage of the water that has settled inside the pre-filter).

Another object of the present invention is to provide welding of distinct thermoplastic components, with a good level of sealing and finish.

One or more of the aforementioned objects of the present invention, inter alia, are achieved by means of a diesel fuel pre-filtering system provided with: a structure (2) for housing: at least two filtering areas; a fuel inlet area (4); and a fuel outlet area (5); and an inspection window (3) equipped with a drain (8) for water, with the pre-filtering system (1) comprising: (i) a first filtering area defining a restriction connecting between the fuel inlet area and a subsequent filtering area; (ii) a second filtering area defining a restriction connecting between a preceding filtering area and the fuel outlet area; and (iii) the structure (2) and the inspection window (3) being composed of thermoplastic materials distinct from each other and connected to each other by a permanent bond.

### BRIEF DESCRIPTION OF THE DRAWINGS

The objects, technical effects and advantages of the present invention will be apparent to persons skilled in the art from the following detailed description which refers to the appended figures, illustrating embodiments which are examples of the invention but do not limit it.
Figure 1 shows a view in cross section of an embodiment of the pre-filtering system according to the present invention.
Figure 2 illustrates a detailed view in cross section of an embodiment of the area of connection of the pre-filtering system according to the present invention.
Figure 3 illustrates a detailed view in cross section of an embodiment of the area of connection of the pre-filtering system according to the present invention activating the fuel line retention valve.

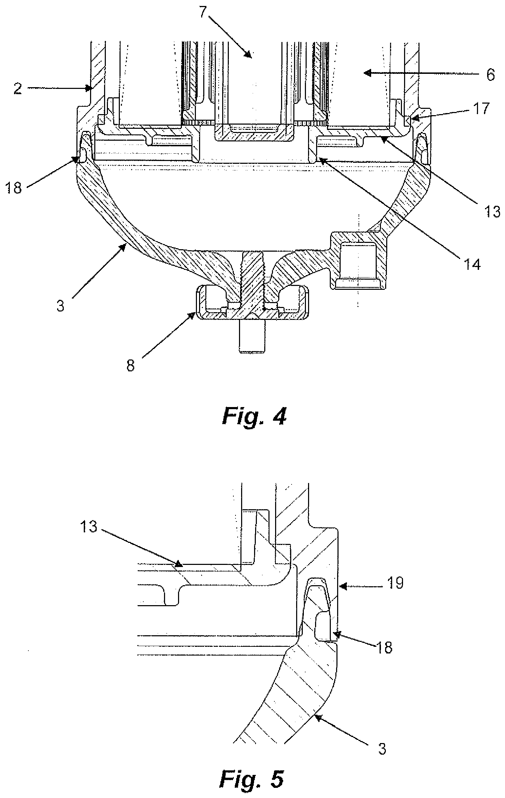

Figure 4 illustrates a detailed view in cross section of a lower area of an embodiment of the pre-filtering system according to the present invention.
Figure 5 illustrates a detailed view in cross section of the area of joining of the structure and the inspection window of an embodiment of the pre-filtering system according to the present invention, comprising a burr housing.

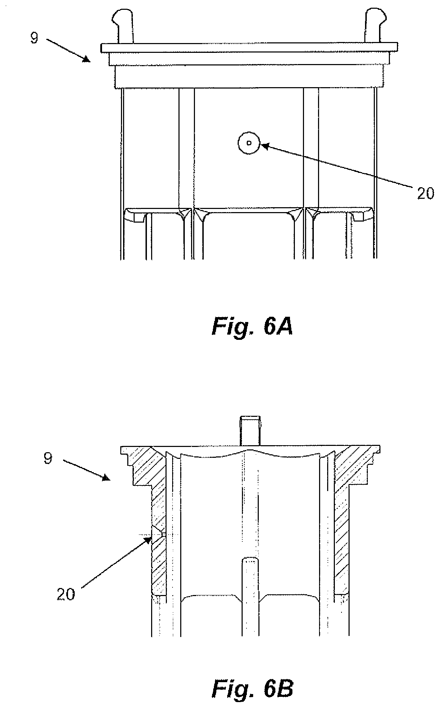

Figures 6A and 6B illustrate respectively a front view and a view in lateral cross section of the area of the pre-filtering system which comprises a capillary hole for escape of gases retained inside the pre-filtering system and/or the fuel supply line.

### DESCRIPTION OF EMBODIMENTS OF THE INVENTION

Initially, it must be pointed out that the components which define the pre-filtering system according to the present invention will be described hereinafter according to specific but non-limiting implementations, since the embodiments thereof can consist of different forms and variations, according to the application required by the person skilled in the art as a function of the geometry of the engine, filtering capacity and required use, amongst other variables.

For the purposes of the present invention, a filtering component is understood to be any component which provides the fluid communication between a first and a second area, and which can retain in a first area any component or aggregate of the fluid which is undesirable in a second area. For the purposes of the present invention, these components and aggregates include dirt present in the fuel, which may derive from the process of storage or transport of the fuel, or also from worn parts inside the supply system (precipitates in the bottom of the tank, parts of worn seals, microorganisms, inter alia). The moisture present in the diesel oil is also highlighted, i.e. for the purposes of the present invention filtering is understood to mean the separating out of any undesirable component at the outlet, ranging from impurities to the water itself present in the diesel.

The diesel fuel pre-filtering system according to the present invention comprises a structure 2 for housing: at least two filtering areas; a fuel inlet area 4; and a fuel outlet area 5.

For the purposes of the present invention, this structure 2 can be defined as any receptacle which houses the filtering components, and any other component which is necessary in order to secure them, as well as at least some of the filtering areas, i.e. the areas where the filtered fluid will pass.

Thus, the filtering areas consist of areas for accommodating the filtered fluid after passage through a filtration means. Consequently, the present invention includes at least two filtering areas, a first filtering area being defined by a restriction connecting between the fuel inlet area and a subsequent filtering area, and the second filtering area being defined by a restriction connecting between a preceding filtering area and the fuel outlet area.

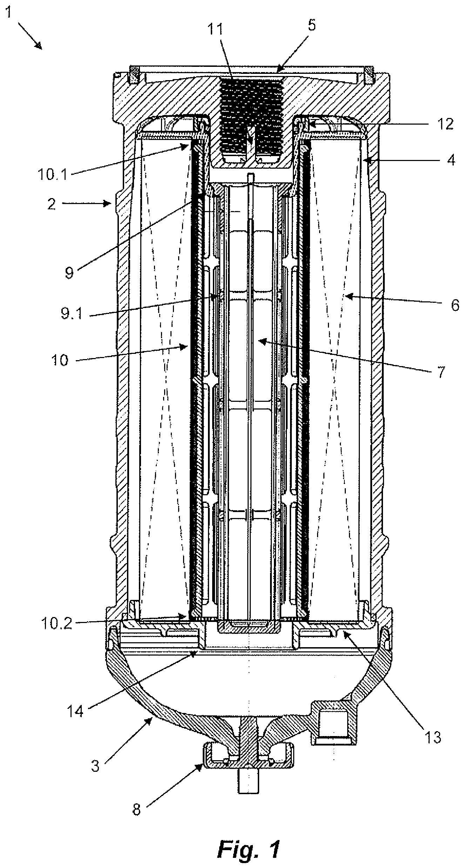

According to one embodiment of the invention, the inlet 4 and outlet 5 areas for the fuel (fluid to be filtered) are an integral part of the structure 2, as represented in figures 1 to 3, the inlet area 4 being defined by a plurality of openings arranged radially along the upper surface of the pre-filtering system 1, allowing the fuel to be distributed along the entire length of the filtering component 6, and the outlet area 5 being defined by an opening in the central portion of the upper area of the pre-filtering system 1, through which the fluid can exit from the interior of the pre-filtering system 1, so that the filtering takes place by means of the movement of the fluid from the edge to the centre of the pre-filtering system 1.

The pre-filtering system 1 also comprises an inspection window 3 which serves the purpose of enabling the user or driver of the vehicle provided with the present pre-filtering system 1 to be able to periodically check the level of water retained inside the pre-filtering system 1, such that, when the water level is high, he can activate a drain 8 in order to allow the water to exit.

The use of an inspection window 3 as a drain 8 is already known in the prior art, and therefore does not limit the concept of the present invention. Thus, it is understood that the use of different systems for inspection and drainage of water that has settled inside the pre-filtering system 1 does not interfere with the scope of protection claimed here.

The structure 2 and the inspection window 3 of the pre-filtering system 1 according to the present invention consist of thermoplastic material, but of different materials, since each area needs different physical characteristics. For example, the area of the inspection window needs to be at least partially translucent and the structure 2 does not. In addition, the main limitation of the structure 2 is its production cost and mechanical strength which is sufficient to withstand the assembly/replacement stresses.

The present invention has a pre-filtering system comprising the structure 2 and the inspection window 3 which are connected to one another permanently, in other words they cannot be separated by the user in a non-destructive manner. The main advantage of this characteristic is that it facilitates and expedites the replacement of the system when the filtering component reaches the end of its period of use.

In this configuration, the user no longer needs to open the pre-filtering system in order to remove the contaminated filtering component and insert a new one, which is difficult and very time-consuming, since the replacement process now becomes only that of unscrewing the system as a whole, and screwing on a new pre-filtering system.

At this point, a feature of the present invention is that said fixed bond is provided by means of welding the structure 2 to the inspection window 3. In another embodiment of the present invention, this welded bonding is carried out in a joining area which is provided with a burr housing 18, consisting of a profile which can absorb the burrs inherent in the process of welding the thermoplastic materials, with the purpose of giving the product a more pleasing final appearance, and also preventing any burrs from exiting to the exterior of the filter, or causing cuts to the hands of the user who may be handling or replacing the filtering component.

Thus, in another embodiment of the present invention, the burr housing 18 is incorporated in the structure 2, and consists of an inner radial recess, which, when the structure 2 is fitted to the inspection window 3. In this condition, the inner radial recess of the structure 2 is positioned immediately below a radial projection 19 from the inspection window 3, such that the melting of material and/or the burrs resulting from the fusion between the structure 2 and the inspection window 3 is accommodated in said radial recess, thus guaranteeing that these components are secured to one another and that there is a neat final finish, without ridges which would affect the final user.

According to one embodiment of the present invention, the system comprises an upper structure 9 for positioning of the filtering components, in other words, which can position the filtering components 6 and 7 correctly for ideal functioning of the pre-filtering system 1. Said upper structure 9 comprises a support base 15 for the filtering component 6, which is responsible for supplying the filtered fluid to the first filtering area.

The upper structure 9 further comprises an empty axial extension 9.1 for housing the filtering component 7, which is responsible for supplying the filtered fluid to the second filtering area, in other words. This empty axial extension 9.1 comprising openings along its length, such as to guarantee that the filtering component 7 is rigid, and also to permit passage of the fluid from the first filtering area to the second filtering area.

The system 1 further comprising a lower support for the filtering component 6 which, according to one embodiment of the invention, is defined by a base disc 13 comprising its distal peripheral area 17 welded to the internal wall of the structure 2, thus securing the disc to the latter, and providing a seal which can prevent the fluid present in the inlet area 4 from being distributed along the external surface of the filtering component 6, thus guaranteeing that the diesel to be filtered can only pass to the first filtering area by means of the filtering component 6. It should be pointed out that, by this means, the use of elastomers is avoided.

Said welding between the base disc 13 and the structure 2 is carried out by any process known in the prior art which results in the joining/fusion of the thermoplastic materials which constitute each of said components.

According to one embodiment of the present invention, the base disc 13 also comprises on its surface opposite the surface for supporting the filtering component 6 a sloped annular retention projection 14, angled in the direction of the inspection window 3, i.e. downwards. This annular projection 14 serves the purpose of preventing water that has settled in the area of the inspection window 3 from reaching the filtering component 7, if the pre-filtering system 1 is tilted. The annular retention projection acts as a barrier, in order to prevent water from reaching the surface of the filtering component 7, if the assembly is tilted with the inspection window full with separated water. The filtering component 7 must not remain in contact with the accumulated water, since the suction pressure can make the water pass through the pores of the hydrophobic membrane.

In addition, the pre-filtering system 1 according to the present invention comprises an empty structure 10 positioned between the filtering components 6 and 7 of the first and second filtering areas, said empty structure 10 being equipped with radial projections 10.1 and 10.2 located at its ends, along its length.

Thus, a first radial projection 10.1 is mounted between the outer wall of the empty axial extension 9.1 and the internal surface of the filtering component 6 of the first filtering area, acting as a positioning guide and restrictor against any displacements of the filtering component 6 inside the pre-filtering system 1.

As already stated, the pre-filtering system according to the present invention comprises a fuel outlet area 5, defined by an opening in the central portion of the upper area of the pre-filtering system 1 which, according to an embodiment of the present invention, is defined by a threaded bore for connection to a fuel supply line 21, which connects the pre-filtering system 1 to the engine.

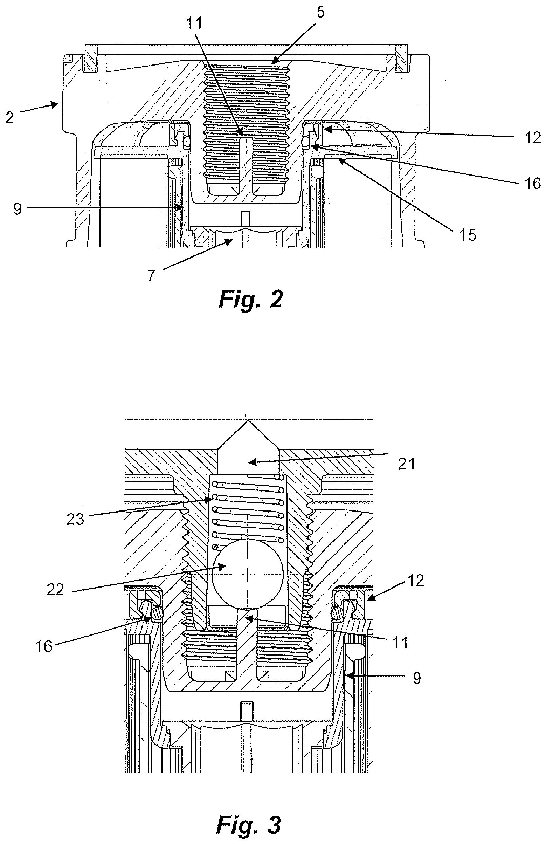

The fuel supply line 21 comprises a retention valve 22 at its end, for the purpose of preventing the loss of filtered fuel contained in the line 21, when the pre-filtering system is replaced. Thus, a retention valve 22 as represented in figure 3 is used.

The retention valve 22 according to figure 3 consists of one of the countless possible embodiments which can be applied in order to obtain the desired technical effect of preventing the emptying out of the fuel retained in the line 21. According to this embodiment, the valve 22 comprises a ball which is compressed against the opening by means of a spring 23. In this case, the pre-filtering system 1 comprises a pin 11 incorporated in the casing of the filter 2, arranged concentrically to the threaded bore, in order to guarantee precision in the activation of the retention valve 22, because of the lack of dependence on assemblies of other components for the formation of the pin for activation of the valve, and also to prevent transverse forces from being applied to the pin in question, in the case of incorrect positioning, which could result in the breakage of the pin, as well as to guarantee that the valve will be open when the pre-filtering system 1 is assembled. Thus, with the pin incorporated, positioning is guaranteed, so as not to depend on the sums of tolerances of components, or assembly of components.

According to another embodiment of the present invention, the pre-filtering system 1 also comprises a spacer ring 12, positioned between the structure 2 and an upper structure 9 for positioning the filtering components, the main aim being to provide at the same time: support for the upper structure 9; and maintenance of the position of a sealing ring 16 positioned between the filtering areas, and secured by the association with the structure 2, the upper structure 9 for positioning the filtering elements and the spacer ring 12. It should be pointed out that the housing formed by items 12 and 9 is a housing without an injection moulding parting line, thus preventing the formation of burrs in the closure line, and guaranteeing that there will be no bypass, in other words preventing the passage of non-filtered fuel.

The sealing ring 16 in question serves the purpose of guaranteeing the sealing between the fuel inlet area and the first filtering area.

Furthermore, according to one embodiment of the present invention, the first filtering component 6 has dimensions appropriate for, and has the main objective of, retaining foreign bodies present in the diesel fuel such as: slivers of metal, filings, bits of material loosened by wear or rust at any point of passage of fluid before the pre-filtering system 1, whilst the second filtering component 7 has the main objective of removing the water present in the diesel fuel.

Consequently, according to an embodiment of the present invention, the second filtering component 7 is defined by a hydrophobic membrane, with permeability such that it prevents the passage of water to the second filtering area, or at least allows the passage of water molecules in a quantity which does not affect the operation of the engine to be supplied with the diesel fuel.

Taking into account the fact that the pre-filtering system 1 according to the present invention is perfected to operate in an area of suction of the low-pressure pump, and therefore below atmospheric pressure, this pressure may not be sufficient to remove air bubbles which may be retained between the first and second filtering areas. As a result, with the aim of facilitating the removal of these air bubbles, according to an embodiment of the present invention, the pre-filtering system 1 comprises at least one relief hole 20 connecting the first filtering area to the second filtering area, this relief hole 20 having calibrated capillarity so as to permit only the passage of gases. Once the air bubbles pass from the first filtering area to the second, the air can be removed from the system by the air vent commonly used at the head with which the pre-filtering system is associated.

Finally, it should be noted that the object of providing a diesel fuel pre-filtering system consisting only of thermoplastic material, which can facilitate and expedite its assembly and replacement, is achieved completely by means of the structure 2 and the inspection window 3, since they are joined securely to one another, because the internal components for guiding and securing the filtering components consist of thermoplastic material, and also because the fuel outlet area 5 comprises a concentric pin 11, to guarantee the correct assembly of the pre-filtering system and activation of the fuel line retention valve 22.

Furthermore, the object of guaranteeing that the inspection window is always on view to the user/motorist who is carrying out preventative maintenance on the vehicle is achieved in that the system is replaced in its entirety each time the filtering components reach their maximum level of saturation. By this means, since the system as a whole is replaced, the inspection window will always offer good conditions of visibility.

Furthermore, the object of providing a diesel fuel pre-filtering system with more than one filtering stage, without the saturation of the first filtering element affecting the passage of water to the fuel supply line, is achieved in that the second filtering element is a hydrophobic membrane.

Finally, the object of carrying out welding of different thermoplastic components, with a good level of sealing and finish, is achieved by the use of a burr housing 18 which can accommodate the ridges and/or molten material in an internal area (between the welded components), without leaving exposed to the user any ridge which can give rise to cuts, inconvenience in handling, or an unattractive aesthetic appearance.

Despite the above description of particular embodiments, the present invention can be used in other types of applications, and its form of implementation can be modified, such that the scope of protection of the invention is limited only by the content of the appended claims, including their possible equivalent variations.

## Claims

1. A DIESEL FUEL PRE-FILTERING SYSTEM (1), equipped with:
**a.** a structure (2) for housing at least two filtering areas; a fuel inlet area (4); and a fuel outlet area (5); and
**b.** an inspection window (3) equipped with a drain (8) for water; wherein:
i. the system (1) comprises a first filtering area with a first filtering component (6) structured so as to define a restriction connection between the fuel inlet area (4) and the subsequent filtering area;
**ii.** the system (1) comprises a second filtering area with a second filtering component (7) structured so as to define a restriction connection between a preceding filtering area and the fuel outlet area (5); and
**iii.** the structure (2) and the inspection window (3) are composed of thermoplastic materials distinct from each other and connected to each other by a permanent bond,
wherein the structure (2) and the inspection window (3) are bonded by means of welding; and
wherein the system (1) further comprises:
**a.** an upper structure (9) for positioning the filtering components which comprises:
i.a support base (15) for the filtering component (6) of the first filtering area;
ii.an empty axial extension (9.1) for housing the filtering component (7) of the second filtering area, wherein the empty axial extension (9.1) comprises openings along its length, such as to guarantee that the filtering component (7) is rigid, and also to permit passage of the fluid from the first filtering area to the second filtering area;
**b.** a base disc (13) to support the filtering component (6) of the first filtering area, with the base disc (13) comprising a distal peripheral area (17) welded to the internal wall of the structure (2);
**c.** an empty structure (10) positioned between the filtering components (6,7) of the first and second filtering areas, equipped with radial projections (10.1, 10.2) at the ends, with a first radial projection (10.1) mounted between the outer wall of the empty axial extension (9.1) and the internal surface of the filtering component (6) of the first filtering area.

2. A DIESEL FUEL PRE-FILTERING SYSTEM (1), according to claim 1, **characterized in that** the fuel outlet area (5) is defined by a threaded bore to connect a fuel inlet line (21) to the motor, wherein the system (1) comprises a pin (11) incorporated in the structure (2) and arranged concentrically to the threaded bore for actuating a retention valve (22) positioned at the entry to the fuel line (21).

3. A DIESEL FUEL PRE-FILTERING SYSTEM (1), according to claim 1, **characterized in that** the base support disc (13) comprises sloped annular retention projections (14), angled in the direction of the inspection window (3).

4. A DIESEL FUEL PRE-FILTERING SYSTEM (1), according to claim 1 **characterized in that** the filtering component (7) of the second filtering area is defined by a hydrophobic membrane.

5. A DIESEL FUEL PRE-FILTERING SYSTEM (1), according to claim 1 or 4, **characterized in that** of the system (1) comprises at least one relief hole (20) with a calibrated capillary so as to permit only the passage of gases.

6. A DIESEL FUEL PRE-FILTERING SYSTEM (1), according to claim 1, **characterized in that** it comprises:
**a.** a spacer ring (12) positioned between the structure (2) and an upper structure (9) for positioning the filtering components; and
**b.** a sealing ring (16) positioned between the filtering areas, set in relation to: the structure (2), the upper structure (9) for positioning the filtering components, and the spacer ring (12).

## Patentansprüche

1. DIESEKRAFTSTOFF-VORFILTRIERSYSTEM (1), ausgestattet mit:
a. einer Struktur (2) zur Aufnahme von mindestens zwei Filtrierbereichen; einem Kraftstoffeinlassbereich (4) und einem Kraftstoffauslassbereich (5); und
b. einem Kontrollfenster (3), ausgestattet mit einem Abfluss (8) für Wasser; wobei:
i.das System (1) einen ersten Filtrierbereich mit einer ersten Filtrierkomponente (6) umfasst, die so strukturiert ist, dass sie eine Begrenzungsverbindung zwischen dem Kraftstoffeinlassbereich (4) und dem nachfolgenden Filtrierbereich definiert;
ii.das System (1) einen zweiten Filtrierbereich mit einer zweiten Filtrierkomponente (7) umfasst, die so strukturiert ist, dass sie eine Begrenzungsverbindung zwischen einem vorangegangenen Filtrierbereich und dem Kraftstoffauslassbereich (5) definiert; und
iii.die Struktur (2) und das Kontrollfenster (3) aus thermoplastischen Materialien bestehen, die voneinander verschieden sind und mittels einer dauerhaften Bindung miteinander verbunden sind,
wobei die Struktur (2) und das Kontrollfenster (3) miteinander verschweißt sind; und
wobei das System (1) Folgendes umfasst:
a. eine obere Struktur (9) zum Positionieren der Filtrierkomponenten, die Folgendes umfasst:
i.eine Stützbasis (15) für die Filtrierkomponente (6) des ersten Filtrierbereichs;
ii.eine leere axiale Verlängerung (9.1) zur Aufnahme der Filtrierkomponente (7) des zweiten Filtrierbereichs, wobei die leere axiale Verlängerung (9.1) Öffnungen entlang ihrer Länge umfasst, um zu garantieren, dass die Filtrierkomponente (7) starr ist, und um auch den Durchfluss des Fluids vom ersten Filtrierbereich zum zweiten Filtrierbereich zu gestatten;
b. eine Basisscheibe (13) zum Stützen der Filtrierkomponente (6) des ersten Filtrierbereichs, wobei die Basisscheibe (13) einen distalen peripheren Bereich (17) umfasst, der mit der Innenwand der Struktur (2) verschweißt ist;
c. eine leere Struktur (10), die zwischen den Filtrierkomponenten (6, 7) des ersten und zweiten Filtrierbereichs positioniert ist, ausgestattet mit radialen Vorsprüngen (10.1, 10.2) an den Enden, wobei ein erster radialer Vorsprung (10.1) zwischen der Außenwand der leeren axialen Verlängerung (9.1) und der Innenoberfläche der Filtrierkomponente (6) des ersten Filtrierbereichs angebracht ist.

2. DIESEKRAFTSTOFF-VORFILTRIERSYSTEM (1) nach Anspruch 1, **dadurch gekennzeichnet, dass** der Kraftstoffauslassbereich (5) durch eine Gewindebohrung zur Verbindung einer Kraftstoffeinlassleitung (21) mit dem Motor definiert ist, wobei das System (1) einen Zapfen (11) umfasst, der in die Struktur (2) integriert ist und konzentrisch zu der Gewindebohrung zum Betätigen eines am Eingang zur Kraftstoffleitung (21) positionierten Rückhalteventils (22) angeordnet ist.

3. DIESEKRAFTSTOFF-VORFILTRIERSYSTEM (1) nach Anspruch 1, **dadurch gekennzeichnet, dass** die Basisstützscheibe (13) schräge, ringförmige Rückhaltevorsprünge (14) umfasst, die in der Richtung des Kontrollfensters (3) gewinkelt sind.

4. DIESEKRAFTSTOFF-VORFILTRIERSYSTEM (1) nach Anspruch 1, **dadurch gekennzeichnet, dass** die Filtrierkomponente (7) des zweiten Filtrierbereichs durch eine hydrophobe Membran definiert ist.

5. DIESEKRAFTSTOFF-VORFILTRIERSYSTEM (1) nach Anspruch 1, **dadurch gekennzeichnet, dass** das System (1) mindestens ein Entlastungsloch (20) mit einer kalibrierten Kapillare umfasst, um nur den Durchlass für Gase zu gestatten.

6. DIESEKRAFTSTOFF-VORFILTRIERSYSTEM (1) nach Anspruch 1, **dadurch gekennzeichnet, dass** es Folgendes umfasst:
a. einen zwischen der Struktur (2) und einer oberen Struktur (9) positionierten Distanzring (12) zum Positionieren der Filtrierkomponenten; und
b. einen zwischen den Filtrierbereichen positionierten Dichtring (16), der in Relation zu: der Struktur (2), der oberen Struktur (9) zum Positionieren der Filtrierkomponenten und dem Distanzring (12) eingestellt ist.

## Revendications

1. SYSTÈME DE PRÉ-FILTRATION DE CARBURANT DIESEL (1), équipé de :
a. une structure (2) pour loger au moins deux zones de filtration ; une zone d'entrée de carburant (4) ; et une zone de sortie de carburant (5) ; et
b. une fenêtre d'inspection (3) équipée d'un drain (8) pour l'eau ;
dans lequel :
i. le système (1) comprend une première zone de filtration comprenant un premier composant de filtration (6) structuré de façon à définir un raccord de restriction entre la zone d'entrée de carburant (4) et la zone de filtration suivante ;
ii. le système (1) comprend une seconde zone de filtration comportant un second composant de filtration (7) structuré de façon à définir un raccord de restriction entre une zone de filtration précédente et la zone de sortie de carburant (5) ; et
iii. la structure (2) et la fenêtre d'inspection (3) sont composées de matériaux thermoplastiques distincts l'un de l'autre et raccordées l'une à l'autre par une liaison permanente,
dans lequel la structure (2) et la fenêtre d'inspection (3) sont liées au moyen d'une soudure ; et
dans lequel le système (1) comprend en outre :
a. une structure supérieure (9) pour positionner les composants de filtration qui comprend :
i. une base de support (15) pour le composant de filtration (6) de la première zone de filtration ;
ii. une extension axiale vide (9.1) pour loger le composant de filtration (7) de la seconde zone de filtration, dans lequel l'extension axiale vide (9.1) comprend des ouvertures le long de sa longueur, de manière à garantir que le composant de filtration (7) soit rigide, et également à permettre le passage du fluide de la première zone de filtration à la seconde zone de filtration ;
b. un disque de base (13) pour supporter le composant de filtration (6) de la première zone de filtration, avec le disque de base (13) comprenant une zone périphérique distale (17) soudée à la paroi interne de la structure (2) ;
c. une structure vide (10) positionnée entre les composants de filtration (6,7) des première et seconde zones de filtration, équipée de saillies radiales (10.1, 10.2) au niveau des extrémités, avec une première saillie radiale (10.1) montée entre la paroi externe de l'extension axiale vide (9.1) et la surface interne du composant de filtration (6) de la première zone de filtration.

2. SYSTÈME DE PRÉ-FILTRATION DE CARBURANT DIESEL (1), selon la revendication 1, **caractérisé en ce que** la zone de sortie de carburant (5) est définie par un alésage fileté pour raccorder une conduite d'entrée de carburant (21) au moteur, dans lequel le système (1) comprend une broche (11) incorporée dans la structure (2) et agencée de manière concentrique par rapport à l'alésage fileté pour actionner une soupape de retenue (22) positionnée au niveau de l'entrée de la conduite de carburant (21).

3. SYSTÈME DE PRÉ-FILTRATION DE CARBURANT DIESEL (1), selon la revendication 1, **caractérisé en ce que** le disque de support de base (13) comprend des saillies de retenue annulaires (14) inclinées, faisant un angle dans la direction de la fenêtre d'inspection (3).

4. SYSTÈME DE PRÉ-FILTRATION DE CARBURANT DIESEL (1), selon la revendication 1 **caractérisé en ce que** le composant de filtration (7) de la seconde zone de filtration est défini par une membrane hydrophobe.

5. SYSTÈME DE PRÉ-FILTRATION DE CARBURANT DIESEL (1), selon la revendication 1 ou 4, **caractérisé en ce que** le système (1) comprend au moins un trou de dégagement (20) comportant un capillaire étalonné de façon à ne permettre que le passage de gaz.

6. SYSTÈME DE PRÉ-FILTRATION DE CARBURANT DIESEL (1), selon la revendication 1, **caractérisé en ce qu'**il comprend :
a. une bague-entretoise (12) positionnée entre la structure (2) et une structure supérieure (9) pour positionner les composants de filtration ; et
b. une bague d'étanchéité (16) positionnée entre les zones de filtration, réglée en relation avec : la structure (2), la structure supérieure (9) pour positionner les composants de filtration, et la bague-entretoise (12).
